# EUROPÄISCHE PATENTSCHRIFT

(11) **EP 2 136 986 B1**
(45) Veröffentlichungstag und Bekanntmachung des Hinweises auf die Patenterteilung: **01.09.2010**
(21) Anmeldenummer: 08748892.0
(22) Anmeldetag: 11.04.2008
(51) Int. Cl.: B29C 55/06, D01D 5/42, F41H 5/04

(54) **VERFAHREN ZUR HERSTELLUNG VON HOCHORIENTIERTEN POLYOLEFINBÄNDERN, DARAUS HERGESTELLTE TEXTILE UND TECHNISCHE FLÄCHENGEBILDE SOWIE DEREN VERWENDUNG IN SCHUTZKÖRPERN ZUM SCHUTZ GEGEN BALLISTISCHE PROJEKTILE U. Ä.**
METHOD FOR THE PRODUCTION OF HIGHLY ORIENTED POLYOLEFIN RIBBONS, TEXTILES AND TECHNICAL FLEXIBLE SHEET MATERIALS PRODUCED THEREFROM, AND THE USE THEREOF IN PROTECTIVE BODIES FOR THE PROTECTION FROM BALLISTIC PROJECTILES AND THE LIKE
PROCÉDÉ DE FABRICATION DE BANDES DE POLYOLÉFINE FORTEMENT ORIENTÉES, PRODUITS PLATS TEXTILES ET TECHNIQUES FABRIQUÉS À L'AIDE DE CE PROCÉDÉ ET UTILISATION DE CES PRODUITS DANS DES CORPS DE PROTECTION DESTINÉS À ASSURER UNE PROTECTION ENTRE AUTRES CONTRE DES PROJECTILES

(30) Priorität: 12.04.2007 DE 102007017621
(43) Veröffentlichungstag der Anmeldung: 30.12.2009
(73) Patentinhaber: Teijin Monofilament Germany GmbH, 86399 Bobingen (DE)
(72) Erfinder: BRÜNING, Hans-Joachim, 86179 Augsburg (DE); FISCHER, Andreas, 86399 Bobingen (DE); BACKER, Jan, Adolph, Dam, NL-5694 WN Son (NL); BONNER, Mark, James, Leeds LS6 1LJ (GB); WARD, Ian, McMillan, Bramhope, Leeds LS 169 EL (GB)
(74) Vertreter: Luderschmidt, Wolfgang
(86) Internationale Anmeldenummer: PCT/EP2008/002887
(87) Internationale Veröffentlichungsnummer: WO 2008/125298

(56) Entgegenhaltungen:
- EP-A- 1 277 573
- EP-A- 1 319 917
- WO-A-00/46435
- WO-A-2004/041511
- WO-A-2006/002977
- GB-A- 2 034 243
- US-A- 4 824 619
- US-A- 5 693 708
- US-A1- 2004 084 802
- US-A1- 2006 099 415

## Beschreibung

Die Erfindung betrifft ein Verfahren zur Herstellung von hochfesten Bändern mit hohem Modul aus hochmolekularem Polyolefin, ein Verfahren zur Herstellung von textilen oder technischen Flächengebilden aus diesen hochfesten Bändern sowie deren Verwendung in geformten oder plattenförmigen Verbundkörpern zum Schutz gegen ballistische Projektile wie Kugeln aus Pistolen, Gewehren usw., sowie Splittern und ähnlichen, die bei Explosionen oder Granateneinschlag usw. den Körper eines Menschen treffen können und ihm so Verletzungen zufügen können oder sogar tödlich wirken können.

Es ist bekannt Polyolefin mittels eines Extruders in geschmolzener Form durch Pressen durch Düsen zu Monofilen zu verarbeiten. Dabei hat die Austrittsöffnung der Düse im Allgemeinen ein rundes Profil. Es sind aber auch Düsen bekannt mit Querschnitten, die sich von den Düsen mit rundem Querschnitt unterscheiden, und z. B. kantenförmige Querschnitte, halbmondartige Querschnitte, trilobale Querschnitte usw. aufweisen.

Bekannt sind auch Breitschlitzdüsen und Düsen, mit denen z. B. Flachfolien oder Schlauchfolien hergestellt werden können.

Bekannt ist auch die Herstellung von Bändchen bzw. Bändchengarnen aus Polyolefinmaterial mit hohem Molekulargewicht. So beschreibt z. B. die kanadische Patentschrift 2166132 ein Verfahren, bei dem zunächst ein Polyethylenfilm oder filmartiges Material aus einem Polyethylen mit einem sehr hohen Molekulargewicht gewalzt wird, wobei dieses filmartige Material auf der Ober- und/oder Unterseite mit einem thermoplastischen Kunststofffilm laminiert wird, wobei dieser thermoplastische Film ein Farbmittel, ein Witterungsstabilisator, ein Antistatikum, ein Hydrophiliermittel, einen Haftvermittler oder ein Mittel, das eine Färbbarkeit vermittelt, enthält. Anschließend wird das aus zwei oder mehreren schichtenden filmartige Material verstreckt und auf eine entsprechende Breite geschnitten oder zu Bändchengarnen gespalten.
Der als Ausgangsmaterial dienende Film aus ultrahochmolekularem Polyethylen wird nach der Lehre dieser kanadischen Patentschrift vorzugsweise durch Pressen von entsprechendem Polyethylenpulver hergestellt. Es wird zwar auch angegeben, dass man dieses hochmolekulare Polyethylen durch Extrusion zu einem Film verarbeiten kann, nähere Hinweise, wie dies geschehen soll, fehlen jedoch völlig.

Außerdem enthält diese Patentschrift keinerlei Hinweise auf die Verwendung der nach der Lehre der kanadischen Patentschrift erhaltenen Bändchen oder Garne zur Herstellung von Körpern, die zum Schutz gegen ballistische Projektile und dergleichen dienen sollen.

In der US PS 5 479 952 werden Bändchen, Streifen und lineare Produkte wie Monofilamente aus Polyethylen mit einem hohen Molekulargewicht beschrieben. Aus der Diskussion des Standes der Technik in dieser US amerikanischen Patentschrift wird jedoch ersichtlich, wie kompliziert und schwierig es ist, entsprechende Bändchen herzustellen. Zwar wird dort auch auf die Möglichkeit hingewiesen, mittels Schmelzextrusion Bändchen herzustellen und diese dann zu verstrecken. Nähere Angaben, insbesondere hinsichtlich der Verfahrensparameter, fehlen in dieser Schrift jedoch völlig, statt dessen wird als Lehre dieser Patentschrift ein Verfahren offenbart, bei dem zunächst ein Bändchen als Vorprodukt, das insbesondere durch Pressen von Pulver hergestellt worden ist, mit einem nicht flüchtigen Lösungsmittel in einem Pseudogelzustand gebracht wird, das NichtLösungsmittel durch Abpressen und Extraktion mit einem flüchtigen Lösungsmittel entfernt wird und dieses so erhaltene Zwischenprodukt sodann gewalzt und anschließend verstreckt wird.

Ein solches Verfahren ist natürlich sehr umständlich und zeitraubend. Die auf diese Weise erhaltenen Bändchen eignen sich insbesondere als Zahnseide, werden jedoch auch für eine Vielzahl weiterer Anwendungen empfohlen wie Angelschnüren, Segeltuchfäden, poröse Membranen, Verstärkungsmittel, Katheder und Ballonmaterial sowie in Kombination mit Glas, Kohlenstoff, Stahl, Bornitrid usw. für Gegenstände mit guter Schlagfestigkeit und kugelfestes und schussfestes Material. Genaue Angaben, wie diese Produkte hergestellt werden sollen, fehlen jedoch völlig.

In der US PS 4 228 119 wird ein Verfahren zur Herstellung von hochfesten Polyethylenfasem beschrieben. Die Lehre dieser amerikanischen Patentschrift beschränkt sich auf das Verspinnen von Polyethylen mit hoher Dichte mit einem Zahlenmittelmolekulargewicht Mn von mindestens 20 000 und einem Gewichtsmittelmolekulargewicht Mw von weniger als 125 000. Es werden dort verschiedene Angaben zu dem Spinn- und Verstreckprozess gegeben; u. a. auch wird der Einsatz eines Heizrohrs hinter der Spinndüse offenbart. Nach diesem Heizrohr wird jedoch der Faden abgeschreckt, vorzugsweise mit Luft von Raumtemperatur.

Hinweise Bänder oder Bändchen herzustellen, fehlen in diesem Dokument, auch werden keine Angaben darüber gemacht, dass die dort beschriebenen Fasern, Filamente oder Garne für die Herstellung von Gegenständen dienen können, die zum Schutz gegen Projektile dienen sollen.

In der EP 0 733 460 A2 wird ein Verfahren zur Herstellung von hochfesten Garnen beschrieben, bei dem ein Film im geschmolzenen oder festen Zustand transversal verstreckt wird. Das Ziel dieser europäischen Patentanmeldung ist es, Filme mit netzwerkartiger Struktur herzustellen, wie es bei den sogenannten Split Fibres oder Spaltgamen der Fall ist. Aus diesen Garnen werden dann Vliese hergestellt, bei denen einzelne Vliese durch querweises Aufeinanderlegen zu einem stärkeren Vlies verbunden werden.

Ein Verfahren, wie es die Erfindung offenbart sowie Produkte gemäß der Erfindung werden in dieser europäischen Patentanmeldung aber weder offenbart noch nahe gelegt.

In der GB 2034243 A wird ein Verfahren zur Herstellung von fibrilliertem synthetischen Polymermaterial beschrieben, das einen hohen Modul und eine hohe Festigkeit aufweist. Dabei wird ausgegangen von Bändchen aus Polyethylen hoher Dichte. Nähere Hinweise wie diese Bändchen hergestellt werden sollen, insbesondere Verfahrensparameter wie es die Erfindung offenbart, befinden sich in diesem Dokument nicht. Auch sind die Festigkeiten der dort eingesetzten Bändchen niedriger als diejenigen, welche gemäß der Erfindung erhalten werden.

In der US 4,824,619 werden Polyethylenfilamente und verstreckte Filme beschrieben. Die Herstellung dieser Fasern oder Bändchen soll jedoch nach einem Verfahren erfolgen, bei dem unter Druck Polyethylen in Form von Pulver geformt wird. Dieses Verfahren unterscheidet sich jedoch völlig von dem Verfahren gemäß der Erfindung.

Die US 5,693,708 A beschreibt ebenfalls ein Verfahren zur Herstellung von verstrecktem Polyethylenmaterial, bei dem ultrahochmolekulares Polyethylen mit 0,001 bis 50 Teilen eines Farbstoffs oder Pigments vermischt wird und sodann durch Kompaktieren geformt wird. Auch dies ist ein völlig anderes Herstellungsverfahren als es die Erfindung beschreibt. Ferner fehlt jeglicher Hinweis aus diesem Polyethylenmaterial Bändchen herzustellen und diese bei der Herstellung von Schutzkörpern zu verwenden.

In der EP 1 277 573 A werden Polyolefinbändchen oder Garne beschrieben, die als Mehrschichtenbänder bzw. Garne vorliegen und zwar in der Struktur AB oder ABA. Abgesehen von der unterschiedlichen Struktur fehlt in dieser Druckschrift auch der für die Erfindung wesentliche Hinweis, dass der geschmolzene Film wenigstens eine Sekunde bei einer Temperatur von 85 bis 135 °C behandelt werden muss.

In der WO 00/46435 A werden Mikrofasern beschrieben, die eine Mikrofibrillenstruktur aufweisen, d.h. wo Löcher oder Zwischenabstände zwischen den einzelnen Faserteilchen vorhanden sind.

Im Übrigen werden an keiner Stelle dieses Dokuments der Einsatz und die Verwendung in Schutzkörpern zum Schutz gegen ballistische Projektile erwähnt.

Die US 2006/0099415 betrifft ein Multifilamentpolyolefingarn und keine Bändchen. Auch fehlen in dieser amerikanischen Patentanmeldung jegliche Hinweise Filamente nach der

Düse bei einer Temperatur von 85 bis 135 °C zu behandeln, um ein gutes Kristallisierungsverhalten zu erreichen. Die Filamente sollen vielmehr nach Verlassen der Düse abgeschreckt werden.

In der WO 2006/002977 A1 werden zwar Bändchen aus Polyethylen und deren Verwendung zur Herstellung von Flächengebilden und ballistischer Schutzbekleidung beschrieben. Zur Herstellung dieser Bändchen wird jedoch nur ein sogenanntes Gelspinnverfahren empfohlen. Dieses Verfahren unterscheidet sich jedoch völlig von dem Verfahren, nach welchem erfindungsgemäß die Bändchen und auch somit die Flächengebilde und Schutzbekleidung hergestellt werden solle.

Darüber hinaus gibt es zahlreiche wissenschaftliche Veröffentlichungen, die sich mit den verschiedensten Aspekten der Verarbeitung von Polyolefinen insbesondere auch von Polyethylen und Polypropylen befassen, die aber allesamt nicht ein brauchbares gewerblich verwertbares Verfahren offenbaren, das einfach vom Polymer ausgehend bis zum fertigen Produkt durchgeführt werden kann. Eindeutige, klare, nacharbeitbare vollständige Verfahrensvorschläge werden nicht gegeben, insbesondere kein zusammenhängendes Verfahren, wie es die Erfindung lehrt.

Auch Taweechai Amomsakchai et.al. (in Development of high strength polyethylene fiber from local materials for ballistic applications: Vortrag während der "4th Thailand Materials Science Technology Conference" 2006) stellen Betrachtungen an über die Entwicklung von hochfesten Polyethylenfasem aus einheimischen Materialien für ballistische Anwendungen. Auch dort wird ein Verfahren, wie es die Erfindung offenbart, nicht gelehrt. So fehlen dort jegliche Hinweise auf das Aussetzen der Bänder einer Temperatur von 85° bis 135 °C, bevor die Bänder verstreckt werden. Insoweit kann der Durchschnittsfachmann auch dieser Veröffentlichung ein Verfahren, wie es die Erfindung lehrt, nicht entnehmen.

Obwohl bereits zahlreiche Verfahren zur Herstellung von hochfesten Polyolefinenbändern, insbesondere von Polypropylen- und Polyethylenbändern bekannt sind, besteht noch ein Bedürfnis nach verbesserten Verfahren sowie nach entsprechenden Bändern und Produkten, welche diese Bänder enthalten.

Aufgabe der Erfindung ist es deshalb ein Verfahren zur Herstellung von hochfesten Bändern mit hohem E-Modul aus hochmolekularen Polyolefinen insbesondere Polypropylen und Polyethylen zur Verfügung zu stellen, das einfach und schnell durchgeführt werden kann und das direkt zu kommerziell verwertbaren Bändern, Bändchen und textiler Flächengebilde sowie Verbundkörpern führt, die insbesondere zum Schutz gegen ballistische Projektile oder Splitter, wie sie bei Explosionen oder von Granaten erzeugt werden, dienen können.

Aufgabe der Erfindung ist es ferner ein Verfahren zur Verfügung zu stellen, bei dem die Eigenschaften von Polyethylen und Polypropylen im Hinblick auf Festigkeit, Verstreckbarkeit und E-Modul optimal ausgenutzt und entwickelt werden können.

Diese Aufgabe wird gelöst durch ein Verfahren zur Herstellung hochfester Bänder mit hohem E-Modul aus hochmolekularem Polyolefin, das dadurch gekennzeichnet ist, dass man das Polyolefin als Schmelze, deren Temperatur mindestens 10 °C über dem Schmelzpunkt des Polyolefins liegt, durch eine Schlitzdüse extrudiert, den austretenden, noch im Schmelzzustand befindlichen Film sodann für eine Zeit von mindestens einer Sekunde einer Temperatur von 85° bis 135 °C aussetzt, wobei der Film infolge Kristallisation des Polymeren opak wird, sodann den Film gegebenenfalls in einzelne Bänder schneidet und anschließend in ein oder mehreren Stufen bei Temperaturen zwischen 90 °C und 165 °C bis zu einer Gesamtverstreckung von 15:1 bis 60:1 verstreckt und die Bänder aufwickelt oder direkt zu textilen oder technischen Flächengebilden weiterverarbeitet.

Bevorzugt stellt man durch Einstellen der Schlitzhöhe, Fördermenge sowie der Gesamtverstreckung eine Dicke der Bänder von 10 µm bis 250 µm insbesondere 30 µm bis 80 µm ein.

Es ist vorteilhaft den Film vor dem Verstrecken in Bänder mit Breiten von 0,6 bis 50, vorzugsweise 5 bis 50 mm insbesondere 7 bis 20 mm zu schneiden.

In einer besonders vorteilhaften Ausführungsform werden die Bänder nach dem Verstrecken mittels einer Nadelwalze perforiert.

Das Aussetzen der Filme einer Temperatur von 85° bis 135 °C wird vorzugsweise durch Überleiten über eine oder mehrere Kühlwalzen, die eine Temperatur von 85° bis 135 °C aufweisen, durchgeführt.

In einer weiteren vorteilhaften Ausführungsform des erfindungsgemäßen Verfahrens wird das Aussetzen einer Temperatur von 85° bis 135 °C durch Durchleiten des Films durch eine Flüssigkeit oder ein Gas, bevorzugt ein inertes Gas mit einer Temperatur von 100 bis 135 °C durchgeführt.

Die verwendeten Polyolefine können übliche Additive enthalten insbesondere bevorzugt 0,01 bis 5 Gew.-% Calciumcarbonat und/oder 0,01 bis 5 Gew.-% eines UV-Stabilisators und/oder 0,01 bis 5 Gew.-% eines Thermostabilisators oder 0,1 bis 5 Gewichtsprozent eines Polyaramidpulvers.

Polyaramide sind Polyamide, auch Aramide genannt, auf Basis von aromatischen Diaminen wie p-Phenylendiamin und aromatischen Dicarbonsäuren wie Terephthalsäure.

Die verwendeten Additive können alleine oder auch in Mischungen eingesetzt werden, wobei die Gesamtmenge der Additive vorzugsweise nicht mehr als 5 Gew.-% beträgt.

Das verwendete hochmolekulare Polyolefin ist im Falle eines hochmolekularen Polyethylens vorzugsweise ein Polyethylen mit einem mittleren Molekulargewicht Mw von 80.000 bis 500.000 und Mn von 5.000 bis 80.000 und im Falle von hochmolekularem Polypropylen ein Polypropylen mit einem mittleren Molekulargewicht von Mw von 100.000 bis 130.000 und Mn von 25.000 bis 33.000.

In einer besonderen Ausführungsform des erfindungsgemäßen Verfahrens wird der Film nach Verlassen der Schlitzdüse direkt, bevor er für eine Zeit von mindestens einer Sekunde einer Temperatur von 85° bis 135 °C ausgesetzt wird, durch eine Wärmezone geleitet, die eine Temperatur von 135 °C bis zu der Temperatur des Schmelzpunktes des extrudierenden Polymers aufweist.

Es ist vorteilhaft, ein bimodales Polyolefin zu verwenden.

Die so hergestellten Bänder, weisen eine Festigkeit von 500 MPa bis 3 000 MPa und einen E-Modul von 20 GPa bis 180 GPa auf, wobei der E-Modul aus der Sekante bestimmt wird, die die Kraft-Dehnungs-Kurve des Bandes, gemessen bei 23 °C Raumtemperatur und 65 % relativer Luftfeuchtigkeit, zwischen 0,5 % und 1,0 % Dehnung schneidet.

Ein weiterer Gegenstand der Erfindung ist ein Verfahren zur Herstellung von textilen und technischen Flächengebilden, welche Bändchen der vorstehend beschriebenen Art enthalten, das dadurch gekennzeichnet ist, dass man die Bänder ein- oder mehrseitig mit einem Kleber und/oder Haftvermittler versieht und sodann durch Laminieren zu zwei- oder mehrschichtigen Flächengebilden verbindet.

Vorzugsweise werden die Bänder als Gelege oder als Gewebe zu den mehrschichtigen Flächengebilden erarbeitet.

Die mehrschichtigen Flächengebilde gemäß der Erfindung lassen sich besonders vorteilhaft als Laminate in plattenförmigen oder flexiblen Verbundkörpern für die Herstellung von Schutzkörpern zum Schutz gegen ballistische Projektile verwenden.

Das erfindungsgemäße Verfahren kann beispielsweise wie folgt durchgeführt werden.

Das Polyolefin wie Polypropylen oder Polyethylen wird in einen Extruder gegeben und dort aufgeschmolzen und dabei auf eine Temperatur erhitzt, die mindestens 10 °C über dem Schmelzpunkt des eingesetzten Polyolefins liegt, vorzugsweise jedoch mindestens 50 °C, sodass die Viskosität der dabei entstehenden Schmelze Werte erreicht, die ein zügiges Extrudieren der Schmelze durch die Schlitzdüse möglich macht.

Bei Polyethylen haben sich hier Typen besonders bewährt, deren Schmelzfließraten (MFR gemäß ISO 1133 (190 °C/2.16 kg) zwischen 0,3 und 1,5 g/10 min liegen. Bei Polypropylen haben sich hier Typen besonders bewährt, deren Schmelzfließraten (MFR gemäß ISO 1133 (230 °C/2,16 kg) zwischen 1,0 und 3 g/10 min liegen.

Die Molekulargewichte werden nach an sich bekannten Methoden nämlich der Methode der Gelpermeationschromatographie (GPC) bestimmt. Zum Einsatz gelangte dabei ein Gerät der Polymerlaboratories GP220; es wurden Säulen Pigel guard plus 2x mixed bed-B, 30 cm, 10 µm verwendet. Als Lösungsmittel kam 1,2,4-trichlorbenzol mit einem Antioxidationsmittel zum Einsatz. Die Flussrate betrug 1,0 ml/min. Die Temperatur 160 ° und als Detektor diente der Brechungsindex.

Als Düse können übliche Schlitzdüsen insbesondere auch Breitschlitzdüsen verwendet werden, deren Breite von 300 mm bis 2 800 mm reichen kann.

Nach Verlassen der Düse wird der Film, der noch im Zustand der Schmelze ist, durch eine Temperierzone geführt, die zur Vergleichmäßigung der Struktur der Schmelze dient. Dadurch wird insbesondere die anschließend erfolgende Kristallisation günstig beeinflusst.

In der Temperierzone wird der Film für mindestens eine Sekunde einer Temperatur von 85° bis 135 °C ausgesetzt. In dieser Zone findet eine vorteilhafte Kristallisation des Polymeren statt. Das Kristallisieren lässt sich am Besten am Opakwerden des Films verfolgen.

Im Zusammenspiel mit Temperieren und Behandeln bei einer Temperatur von 85° bis 135 °C werden günstige Voraussetzungen für die Verstreckbarkeit und damit für das Erreichen von hervorragenden mechanischen Eigenschaften wie Festigkeit und E-Modul geschaffen. Nach dem Behandeln bei einer Temperatur von 85° bis 135 °C werden die Bänder in ein oder mehreren Stufen bei Temperaturen von 90 bis 165 °C verstreckt, dabei ist unter Gesamtverstreckung die Summe aus den Verstreckungsbeträgen bei den einzelnen Verstreckungsstufen und dem gegebenenfalls vorhandenen sogenannten Spinnverzug zu verstehen. Unter Spinnverzug ist die Differenz zwischen Austrittsgeschwindigkeit an der Düse und der Geschwindigkeit zu verstehen, mit welcher die Bänder, die 85° bis 135 °C Zone verlassen.

Erfindungsgemäß ist es möglich, durch Variieren einerseits des Spinnverzugs und andererseits der nachfolgenden Verstreckungen die Eigenschaften der erhaltenen Bänder zu beeinflussen.

Die Bänder können nach dem Verstrecken auf geringere Breite geschnitten werden, z. B. auf Breiten von minimal 0,6 mm oder bis 50 mm. Es ist aber auch möglich, das Band auf seiner ursprünglichen Breite beispielsweise 50 cm oder 1 m zu belassen. Die Bänder können dann entweder aufgewickelt werden und zu einem späteren Zeitpunkt der Weiterverarbeitung zugeführt werden. Sie können aber auch direkt der Weiterverarbeitung zugeführt werden.

In einer besonderen Ausführungsform der Erfindung werden die Bänder nach dem Verstrecken mittels einer Nadelwalze perforiert.

Das Perforieren wird vorteilhaft insbesondere bei Bändern größerer Breite durchgeführt, da sie dadurch u. a. auch eine besondere Flexibilität erhalten und im textilen oder technischen Flächengebilde sich als sehr vorteilhaft erweisen.

Die Bändchen, insbesondere mit schmaleren Breiten können sehr vorteilhaft zu textilen oder technischen Flächengebilden weiter verarbeitet werden, insbesondere zu Geweben und Gelegen.

Diese Gewebe oder Gelege können dann vorteilhaft zu mehrschichtigen Flächengebilden laminiert werden, wobei es vorteilhaft ist die einzelnen Schichten ein- oder mehrseitig mit einem Kleber und/oder einem Haftvermittler zu versehen und sodann durch Laminieren zu einem Verbundkörper zu kombinieren.

Es versteht sich von selbst, dass der Verbundkörper außer den Geweben oder Gelegen noch weitere Mittel enthalten kann, wie z. B. plastische Kunststoffe oder Duroplasten, sodass je nach Bedarf plattenförmige Verbundstoffe erhalten werden können, die sich durch eine besondere Steifigkeit auszeichnen oder auch flexible Verbundstoffe. Als Klebstoffe oder Haftvermittlersysteme werden insbesondere Mittel verwendet, deren Schmelzpunkt bei 5 bis 30 °C unterhalb der Schmelztemperatur des Polymers, das bei der Herstellung der Bänder verwendet wurde, liegt.

Die Erfindung wird anhand zweier Beispiele erläutert, wobei die Einzelheiten der Tabelle zu entnehmen sind.

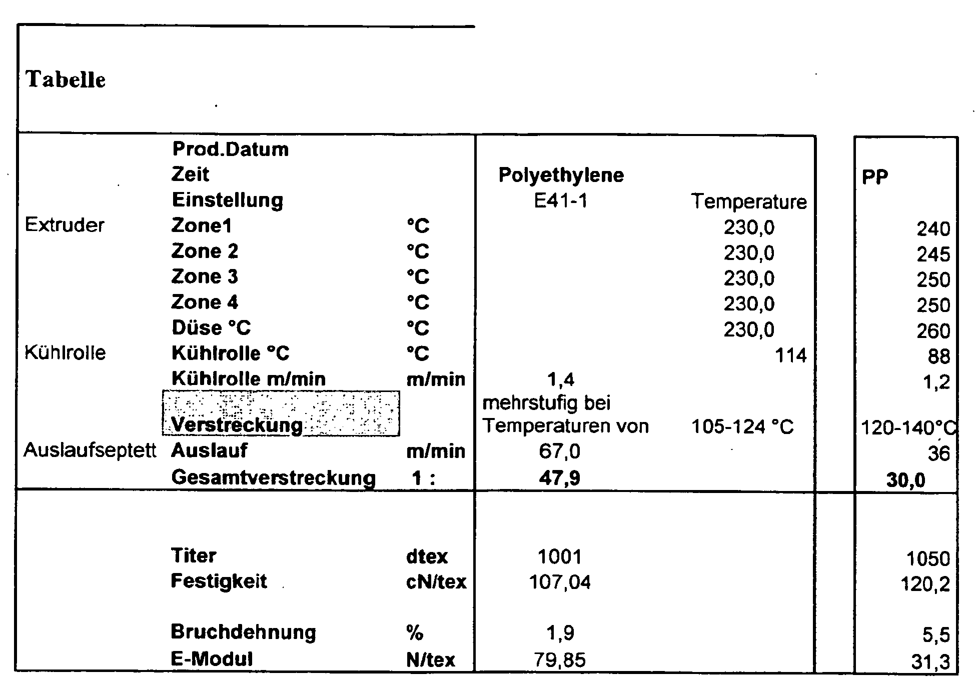

Es war besonders überraschend, dass es mittels der Erfindung möglich ist, hervorragende Bänder aus Polypropylen und Polyethylen herzustellen. Das erfindungsgemäße Verfahren kann an einem Stück durchgeführt werden, d. h. vom Polymer bis zum fertigen Band ohne Unterbrechung, es arbeitet ohne Komplikationen, schnell und reproduzierbar. Die aus den Bändern hergestellten textilen oder technischen Flächengebilde zeichnen sich durch hervorragende Eigenschaften aus und sind insbesondere als Schutzkörper gegen ballistische Projektile geeignet. Sie finden deshalb insbesondere bei der Herstellung von Schutzbekleidung Verwendung sowie auch bei der Herstellung von plattenförmigen Verbundkörpern, die auch als Baustoffe für gesicherte Bauwerke Einsatz finden können.

Besonders vorteilhaft sind textile und technische Verbundstoffe, die aus mehreren Lagen eines Gewebes oder eines Geleges bestehen.

Das bedeutet beispielsweise bei dem Einsatz von Geweben zur Herstellung von mehrschichtigen Verbundkörpern, dass beispielsweise eine Gewebeschicht mit der Richtung der Kettfäden in Längsrichtung liegt, die nächste Schicht mit den Kettfäden zu den Kettfäden der darunter liegenden oder darüber liegenden Schicht einen Winkel von beispielsweise von mindestens 10 ° aufweist. Auf diese Weise ist es möglich, Verbundkörper oder textile Laminate zu erhalten, die in besonderer Weise geeignet sind, Projektile aufzufangen und festzuhalten, da die Energieaufnahme in diesen Verbundkörpern besonders hoch ist, d. h. die Kugel wird entsprechend schnell und stark abgebremst.

Es ist möglich, auch Winkel bis zu 90° zu wählen. Man kann eine oder mehrere Lagen, bei denen z. B. die Kettfäden, d. h. die Kettbänder, in Längsrichtung liegen, mit Geweben kombinieren, deren Kettfäden im Winkel zu dem Kettfaden der Gewebe mit longitudinaler Ausrichtung liegen. Dazu können dann einerseits Bahnen, die longitudinal verlaufen mit Abschnitten belegt werden, bei denen die Kettfäden im Winkel von 10 bis 90 ° zur longitudinalen Bahn liegen.

Es war besonders überraschend, dass man mit Hilfe der Erfindung Polyolefin in dem Molekulargewichtsbereich von 80.000 bis 500.000 bei Polyethylen bzw. im entsprechenden Bereich von Polypropylen Bänder erhält, die eine Festigkeit über 1 GPa aufweisen und die niedrige Bruchdehnungen im Bereich von 2 - 6 aufweisen. Die Bänder lassen sich mit hohen Geschwindigkeiten herstellen, wobei Auslaufgeschwindigkeiten bis zu 250 m/min und mehr möglich sind, und zwar in einem durch, d. h. von der Düse bis zur Geschwindigkeit der letzten Verstreckrolle, wobei diese Geschwindigkeit dann auch als Aufspulgeschwindigkeit genommen werden kann.

Es sind Gesamtverstreckungen von 1:15 bis 1:60 möglich und E-Module von 20 -120 GPa. Bei konventionellen Polyolefinbändchen, die im niedrigeren Molekulargewichtsbereich liegen, liegt der E-Modul bei maximal 20 GPa und die Verstreckung üblicherweise bis maximal 1:20. Beim Gelspinnen von ultrahochmolekularen Polyolefinen oder bei dem Kompaktierverfahren, bei denen Pulver komprimiert werden, kann man maximal mit einer Auslaufgeschwindigkeit von 60 m/min arbeiten.

## Patentansprüche

1. Verfahren zur Herstellung hochfester Bänder mit hohem E-Modul aus hochmolekularem Polyolefin, **dadurch gekennzeichnet, dass** man das Polyolefin als Schmelze, deren Temperatur mindestens 10 °C über dem Schmelzpunkt des Polyolefins liegt, durch eine Schlitzdüse extrudiert, den austretenden, noch im Schmelzzustand befindlichen Film sodann für eine Zeit von mindestens einer Sekunde einer Temperatur von 85° bis 135 °C aussetzt, wobei der Film infolge Kristallisation des Polymeren opak wird, sodann den Film gegebenenfalls in einzelne Bänder schneidet und anschließend in ein oder mehreren Stufen bei Temperaturen zwischen 90 °C und 165 °C bis zu einer Gesamtverstreckung von 15:1 bis 60:1 verstreckt und die Bänder aufwickelt oder direkt zu textilen oder technischen Flächengebilden weiterverarbeitet.

2. Verfahren nach Anspruch 1, **dadurch gekennzeichnet, dass** man durch Einstellen der Schlitzhöhe, der Fördermenge sowie der Gesamtverstreckung eine Dicke der Bänder von 10 µm bis 250 µm einstellt.

3. Verfahren nach Anspruch 2, **dadurch gekennzeichnet, dass** man eine Dicke der Bänder von 30 µm bis 80 µm einstellt.

4. Verfahren nach mindestens einem der Ansprüche 1 bis 3, **dadurch gekennzeichnet, dass** man die Filme vor dem Verstrecken auf eine Breite von 0,6 bis 50 mm schneidet.

5. Verfahren nach Anspruch 4, **dadurch gekennzeichnet, dass** man die Filme auf eine Breite von 5 bis 20 mm schneidet.

6. Verfahren nach mindestens einem der Ansprüche 1 bis 5, **dadurch gekennzeichnet, dass** man die Bänder nach dem Verstrecken mittels einer Nadelwalze perforiert.

7. Verfahren nach mindestens einem der Ansprüche 1 bis 6, **dadurch gekennzeichnet, dass** man den Film einer Temperatur von 85° bis 135 °C durch Überleiten über eine oder mehrere Kühlwalzen aussetzt, die eine Temperatur von 85° bis 135 °C aufweisen.

8. Verfahren nach mindestens einem der Ansprüche 1 bis 6, **dadurch gekennzeichnet, dass** man das Aussetzen einer Temperatur von 85° bis 135 °C durch Durchleiten des Films durch eine Flüssigkeit oder ein Gas, bevorzugt ein inertes Gas mit einer Temperatur von 85° bis 135 °C durchführt.

9. Verfahren nach mindestens einem der Ansprüche 1 bis 8, **dadurch gekennzeichnet, dass** das verwendete Polyolefin 0,01 bis 5 Gew.-% Calciumcarbonat enthält.

10. Verfahren nach mindestens einem der Ansprüche 1 bis 9, **dadurch gekennzeichnet, dass** das verwendete Polyolefin 0,01 bis 5 Gew.-% eines UV-Stabilisators enthält.

11. Verfahren nach mindestens einem der Ansprüche 1 bis 10, **dadurch gekennzeichnet, dass** das verwendete Polyolefin 0,01 bis 5 Gew.-% eines Aramids vorzugsweise eines Polyaramidpulvers enthält.

12. Verfahren nach mindestens einem der Ansprüche 1 bis 11, **dadurch gekennzeichnet, dass** man als hochmolekulares Polyolefin ein hochmolekulares Polyethylen mit einem mittleren Molekulargewicht Mw von 80.000 bis 500.000 und Mn von 5.000 bis 80.000 verwendet.

13. Verfahren nach mindestens einem der Ansprüche 1 bis 11, **dadurch gekennzeichnet, dass** man als hochmolekulares Polyolefin ein hochmolekulares Polypropylen mit einem mittleren Molekulargewicht Mw von 100.000 bis 130.000 und Mn von 25.000 bis 33.000 verwendet.

14. Verfahren nach mindestens einem der Ansprüche 1 bis 13, **dadurch gekennzeichnet, dass** man den Film nach Verlassen der Schlitzdüse vor der Temperierzone direkt für eine Zeit von mindestens einer Sekunde noch durch eine Wärmezone führt, die eine Temperatur von 135 °C bis zu einer Temperatur des Schmelzpunktes des extrudierten Polymeren aufweist.

15. Verfahren nach mindestens einem der Ansprüche 1 bis 12 und 14, **dadurch gekennzeichnet, dass** man ein bimodales Polyethylen verwendet.

16. Verfahren zur Herstellung von textilen oder technischen Flächengebilden, **dadurch gekennzeichnet, dass** man Bändchen, hergestellt nach einem Verfahren gemäß einem der Ansprüche 1 bis 15 verwendet und die Bänder ein- oder mehrseitig mit einem Kleber und/oder Haftvermittler versieht und sodann durch Laminieren zu zwei- oder mehrschichtigen Flächengebilden verbindet.

17. Verfahren zur Herstellung der Flächengebilde nach Anspruch 16, **dadurch gekennzeichnet, dass** man die Bänder als Gelege oder als Gewebe zu den mehrschichtigen Flächengebilden verarbeitet.

18. Flächengebilde hergestellt nach einem Verfahren gemäß Anspruch 16 oder 17, **dadurch gekennzeichnet, dass** die Gelege oder Gewebe so mit einander laminiert sind, dass die einzelnen Lagen der Flächenkörper so aufgebaut sind, dass die Verstreckrichtungen der sie enthaltenden Filme bzw. Bänder einen Winkel von mindestens 10° zu den Verstreckungsrichtungen der Bänder in den darüber oder darunter liegenden Geweben oder Gelegen aufweisen.

19. Verwendung der Flächengebilde nach Anspruch 18 oder hergestellt nach einem Verfahren gemäß Anspruch 16 oder 17, zur Herstellung von Schutzkörpern zum Schutz gegen ballistische Projektile, **dadurch gekennzeichnet, dass** die Gelege oder Gewebe in plattenförmigen oder flexiblen Verbundkörpern verwendet werden.

## Claims

1. Method of producing high-strength ribbons having a high modulus of elasticity from polyolefin of high molecular weight, **characterised in that** the polyolefin is extruded through a slit die as a melt whose temperature is at least 10°C above the melting point of the polyolefin, the emerging film, which is still in the molten state, is then exposed to a temperature from 85° to 13°C for a period of at least one second, wherein the film becomes opaque owing to the crystallisation of the polymers, the film is then cut into individual ribbons if required and is subsequently stretched in one or more stages at temperatures of between 90°C and 165°C until a total stretch of 15:1 to 60:1 is reached, and the ribbons are wound or further processed directly into textile or engineering sheet materials.

2. Method as claimed in Claim 1, **characterised in that** a thickness from 10 µm to 250 µm is set for the ribbons by setting the height of the slit, the feed quantity and the total stretch.

3. Method as claimed in Claim 2, **characterised in that** a thickness from 30 µm to 80 µm is set for the ribbons.

4. Method as claimed in at least one of Claims 1 to 3, **characterised in that** the films are cut to a width from 0.6 to 50 mm before being stretched.

5. Method as claimed in Claim 4, **characterised in that** the films are cut to a width from 5 to 20 mm.

6. Method as claimed in at least one of Claims 1 to 5, **characterised in that** the ribbons are perforated by means of a needle roller after being stretched.

7. Method as claimed in at least one of Claims 1 to 6, **characterised in that** the film is exposed to a temperature from 85º to 135°C by passing it over one or more cooling rollers which are at a temperature from 85° to 135°C.

8. Method as claimed in at least one of Claims 1 to 6. **characterised in that** the exposure to a temperature from 85° to 135°C is performed by passing the film through a liquid or a gas, preferably an inert gas, at a temperature from 85° to 135°C.

9. Method as claimed in at least one of Claims 1 to 8, **characterised in that** the polyolefm used contains 0.01 to 5% by weight of calcium carbonate.

10. Method as claimed in at least one of Claims 1 to 9, **characterised in that** the polyolefin used contains 0.01 to 5% by weight of a UV-stabiliser.

11. Method as claimed in at least one of Claims 1 to 10, **characterised in that** the polyolefin used contains 0.01 to 5% by weight of an aramide, preferably a polyaramide powder.

12. Method as claimed in at least one of Claims 1 to 11, **characterised in that** a polyethylene of high molecular weight having an average molecular weight Mw from 80 000 to 500 000 and Mn from 5 000 to 80 000 is used as the polyolefin of high molecular weight.

13. Method as claimed in at least one of Claims 1 to 11, **characterised in that** a polypropylene of high molecular weight having an average molecular weight Mw from 100 000 to 130 000 and Mn from 25 000 to 33 000 is used as the polyolefin of high molecular weight.

14. Method as claimed in at least one of Claims 1 to 13, **characterised in that** the film, on leaving the slit die upstream of the tempering zone, is fed, for another period of at least one second, directly through a heating zone which is at a temperature from 135°C to a temperature of the melting point of the polymer being extruded.

15. Method as claimed in at least one of Claims 1 to 12 and 14, **characterised in that** a bimodal polyethylene is used.

16. Method of producing textile or engineering sheet materials, **characterised in that** ribbons produced according to a method as claimed in any one of Claims 1 to 15 5 are used and the ribbons are provided on one or more sides with an adhesive and/or an adhesion promoter and are then connected by lamination to form sheet materials having two or more layers.

17. Method of producing the sheet materials as claimed in Claim 16, **characterised in that** the ribbons are processed into the multilayered sheet materials as non-crimp fabrics or woven fabrics.

18. Sheet material produced according to a method as claimed in Claim 16 or 17, **characterised in that** the non-crimp fabrics or woven fabrics are laminated to one another in such a way that the individual layers of the sheet bodies are constructed in such a way that the directions of stretch of the films or ribbons containing them are at an angle of at least 10° to the directions of stretch of the ribbons in the woven fabrics or non-crimp fabrics situated above them or below them.

19. Use of the sheet materials as claimed in Claim 18 or produced according to a method as claimed in Claim 16 or 17, for producing protective bodies for providing protection against ballistic projectiles, **characterised in that** the non-crimp fabrics or woven fabrics are used in plate-like or flexible

## Revendications

1. Procédé pour la fabrication de bandes à résistance élevée possédant un module d'élasticité élevée à partir d'une polyoléfine à poids moléculaire élevé, **caractérisé en ce qu'**on procède à l'extrusion de la polyoléfine, sous la forme d'une masse fondue dont la température est supérieure à concurrence d'au moins 10 °C au point de fusion de la polyoléfine, à travers une filière plate ; on expose ensuite le film qui en sort, se trouvant encore à l'état de masse fondue, pendant un laps de temps d'au moins une seconde à une température de 85° à 135 °C, le film devenant opaque suite à la cristallisation du polymère ; ensuite, on découpe le film le cas échéant en bandes individuelles, que l'on soumet ensuite à un étirage, en une ou plusieurs étapes, à des températures entre 90 °C et 165 °C, jusqu'à ce que l'on obtienne un étirage global de 15:1 à 60:1 ; et on enroule les bandes ou bien on les soumet directement à un traitement ultérieur pour obtenir des produits plats textiles ou techniques.

2. Procédé selon la revendication 1, **caractérisé en ce que,** via le réglage de la hauteur de la fente, de la quantité de transport et de l'étirage global, on règle une épaisseur des bandes de 10 µm à 250 µm.

3. Procédé selon la revendication 2, **caractérisé en ce qu'**on règle une épaisseur des bandes de 30 µm à 80 µm.

4. Procédé selon au moins une des revendications 1 à 3, **caractérisé en ce qu'**on découpe les films avant l'étirage pour obtenir une largeur de 0,6 à 50 mm.

5. Procédé selon la revendication 4, **caractérisé en ce qu'**on découpe les films pour obtenir une largeur de 5 à 20 mm.

6. Procédé selon au moins une des revendications 1 à 5, **caractérisé en ce qu'**on perfore les bandes après l'étirage, au moyen d'un cylindre à aiguilles.

7. Procédé selon au moins une des revendications 1 à 6, **caractérisé en ce qu'**on expose le film à une température de 85° à 135 °C en le guidant par-dessus un ou plusieurs cylindres refroidisseurs qui présentent une température de 85° à 135 °C.

8. Procédé selon au moins une des revendications 1 à 6, **caractérisé en ce qu'**on effectue l'exposition à une température de 85° à 135 °C par guidage du film à travers un liquide ou un gaz, de préférence un gaz inerte possédant une température de 85° à 135 °C.

9. Procédé selon au moins une des revendications 1 à 8, **caractérisé en ce que** la polyoléfine que l'on utilise contient du carbonate de calcium à concurrence de 0,01 à 5 % en poids.

10. Procédé selon au moins une des revendications 1 à 9, **caractérisé en ce que** la polyoléfine que l'on utilise contient un stabilisateur contre l'effet du rayonnement ultraviolet à concurrence de 0,01 à 5 % en poids.

11. Procédé selon au moins une des revendications 1 à 10, **caractérisé en ce que** la polyoléfine que l'on utilise contient un aramide, de préférence une poudre de polyaramide à concurrence de 0, 01 à 5 % en poids.

12. Procédé selon au moins une des revendications 1 à 11, **caractérisé en ce qu'**on utilise, à titre de polyoléfine à poids moléculaire élevé, un polyéthylène à poids moléculaire élevé possédant un poids moléculaire moyen Mw de 80.000 à 500.000 et une valeur Mn de 5000 à 80.000.

13. Procédé selon au moins une des revendications 1 à 11, **caractérisé en ce qu'**on utilise, à titre de polyoléfine à poids moléculaire élevé, un polypropylène à poids moléculaire élevé possédant un poids moléculaire moyen Mw de 100.000 à 130.000 et une valeur Mn de 25.000 à 33.000.

14. Procédé selon au moins une des revendications 1 à 13, **caractérisé en ce qu'**on guide le film, une fois que ce dernier a quitté la filière plate, directement avant la zone de traitement thermique, pendant un laps de temps d'au moins une seconde, encore à travers une zone de chauffage qui présente une température de 135 °C jusqu'à une température correspondant au point de fusion du polymère extrudé.

15. Procédé selon au moins une des revendications 1 à 12 et 14, **caractérisé en ce qu'**on utilise un polyéthylène bimodal.

16. Procédé pour la fabrication de produits plats textiles ou techniques, **caractérisé en ce que** l'on utilise des petites bandes fabriquées conformément à un procédé selon l'une quelconque des revendications 1 à 15 et on munit les bandes, sur seul côté ou sur plusieurs côtés d'un adhésif et/ou d'un agent d'accrochage et on les relie ensuite par stratification pour obtenir des produits plats constitués par deux couches ou par plus de deux couches.

17. Procédé pour la fabrication des produits plats selon la revendication 16, **caractérisé en ce qu'**on traite les bandes sous la forme de nappes ou sous la forme de tissus pour obtenir les produits plats multicouches.

18. Produit plat fabriqué conformément à un procédé selon la revendication 16 ou 17, **caractérisé en ce qu'**on stratifie réciproquement la nappe ou le tissu de façon à obtenir une composition des couches individuelles des corps plats telle que les directions d'étirage des films respectivement des bandes qui les contiennent forment un angle d'au moins 10° par rapport aux directions d'étirage des bandes dans les nappes ou dans les tissus disposés par-dessus ou par dessous.

19. Utilisation des produits plats selon la revendication 18 ou fabriqués conformément à un procédé selon la revendication 16 ou 17, pour la fabrication de corps de protection destinés à offrir une protection contre des projectiles balistiques, **caractérisée en ce qu'**on utilise la nappe ou le tissu dans des corps composites de forme plate ou flexibles.
